# FASCICULE DE BREVET EUROPEEN

(11) **EP 3 384 196 B1**
(45) Date de publication et mention de la délivrance du brevet: **11.09.2019**
(21) Numéro de dépôt: 16804830.4
(22) Date de dépôt: 07.11.2016
(51) Int. Cl.: F16L 37/098, F16L 37/091

(54) **RACCORD TUBULAIRE RAPIDE AVEC BAGUE SECABLE POUR CONNEXION FLUIDIQUE SECURISEE**
ROHRFÖRMIGE SCHNELLKUPPLUNG MIT TEILBAREM RING ZUR SICHEREN FLUIDVERBINDUNG
TUBULAR QUICK COUPLING COMPRISING DIVISIBLE RING FOR SECURE FLUID CONNECTION

(30) Priorité: 30.11.2015 FR 1561538
(43) Date de publication de la demande: 10.10.2018
(73) Titulaire: A Raymond Et Cie, 38000 Grenoble (FR)
(72) Inventeur: CHATELAIN, Clément, 38000 Grenoble (FR); RABUT, Quentin, 38500 Saint Nicolas de Macherin (FR)
(74) Mandataire: Prugneau, Philippe
(86) Numéro de dépôt international: PCT/FR2016/052874
(87) Numéro de publication internationale: WO 2017/093626

(56) Documents cités:
- GB-A- 2 490 970
- US-A- 4 573 716
- US-A- 6 086 119

## Description

### Domaine technique

L'invention concerne un raccord tubulaire rapide comportant un premier élément tubulaire avec un corps creux définissant un orifice axial destiné à recevoir un second élément tubulaire pourvu d'une nervure circulaire, un verrou bloqué axialement dans le premier élément tubulaire et actionnable radialement pour libérer le second élément tubulaire du premier élément tubulaire et un système de sécurité qui s'oppose à la libération du second élément tubulaire.

### Technique antérieure

Dans l'industrie automobile, les raccords tubulaires rapides sont utilisés pour raccorder deux conduites de transport de fluide et en particulier pour le raccordement de l'injecteur de carburant, du filtre, du radiateur ou de tout autre équipement adapté et/ou dans tout autre domaine technique similaire.

Des raccords tubulaires comprennent généralement un premier élément tubulaire avec un corps creux pourvu d'un logement destiné à recevoir par encliquetage un second élément tubulaire avec un verrou agencé dans le logement pour bloquer axialement le second élément dans le premier élément, le verrou étant actionnable pour libérer le second élément si l'on veut démonter le raccord de façon désirée.

De tels raccords tubulaires sont notamment connus des publications US 6,086,119 et WO2014/170590.

Certains constructeurs cherchent maintenant à sécuriser la connexion entre les deux éléments tubulaires après que celle-ci ce soit établie en vue de pouvoir empêcher une déconnexion non désirée. Pour cela, il est avantageux d'ajouter un système de sécurité pour empêcher l'actionnement du verrou et ainsi garantir la connexion. On connait par exemple des documents US 4,573,716, US 4,923,220 et GB 2490970 un système de sécurité pour raccord tubulaire correspondant à un couvercle ou un manchon, qui viennent se positionner sur le raccord tubulaire, pour éviter une libération accidentelle du second élément tubulaire du raccord.

Néanmoins ces systèmes de sécurité étant amovibles, ils ne permettent pas d'assurer une connexion indémontable dans une position effective de raccordement des conduites une fois que celle-ci se soit établie.

### Exposé de l'invention

Le but de l'invention est de remédier à ces inconvénients en proposant un raccord facile et rapide d'utilisation pour une connexion fluidique sécurisée tout en restant démontable lorsque cela est nécessaire.

Plus particulièrement, l'invention a pour objet un raccord tubulaire rapide, comportant un premier élément tubulaire avec un corps creux de connecteur définissant un orifice axial destiné à recevoir un second élément tubulaire pourvu d'une nervure circulaire, un verrou bloqué axialement dans le premier élément tubulaire et actionnable radialement pour libérer le second élément tubulaire du premier élément tubulaire et un système de sécurité qui s'oppose à la libération du second élément tubulaire caractérisé en ce que le système de sécurité est une bague flexible et sécable qui a une portion de périmètre à l'intérieur du premier élément tubulaire entre l'entrée de l'orifice du corps et le verrou pour assurer le blocage coaxial du second élément dans le premier élément malgré l'actionnement du verrou, la bague ayant au moins une portion de périmètre sous forme de créneau sécable qui se projette à l'extérieur du corps.

Le raccord tubulaire rapide selon l'invention peut encore présenter les particularités suivantes :
- la bague peut comprendre sur la portion de périmètre à l'intérieur du premier élément tubulaire au moins une nervure inclinée radialement pour, lors de l'engagement axial du second élément tubulaire dans l'orifice axial, s'écarter radialement sous l'effet de l'appui axial de la nervure circulaire sur la partie inclinée de la nervure et autoriser le passage de la nervure circulaire puis se resserrer derrière la nervure circulaire ;
- la nervure inclinée peut comprendre en outre un cran harpon qui vient en contact sur la nervure circulaire du second élément tubulaire et une rainure interne du corps creux pour bloquer axialement le second élément tubulaire dans le premier élément tubulaire ;
- la bague peut comprendre deux nervures inclinées diamétralement opposées ;
- la bague peut comprendre au moins un cran de retenue qui coopère avec une rainure interne du corps pour bloquer axialement la bague dans le corps du premier élément tubulaire ;
- la bague peut comprendre deux créneaux opposés.

Avec cet agencement selon l'invention, on obtient un raccord rapide et sécurisé entre deux conduites de transport de fluide par encliquetage d'un second élément dans un premier élément tubulaire.

L'ajout d'une bague selon l'invention, comme système de sécurité permet d'éviter de démonter de façon non contrôlée le raccord pour garantir la connexion entre les conduits après que celle-ci soit établie par la présence des crans harpons sur la bague qui s'oppose à l'extraction du second élément tubulaire. Même en actionnant le verrou, le second élément reste bloqué dans le premier élément.

La bague présente une forme sécable dépassante et accessible du corps du premier élément tubulaire. Une fois cette forme cassée, la bague est sortie du premier élément tubulaire pour démonter le raccord. En effet, la bague ne retenant plus le second élément dans le corps du premier élément, le raccord rapide peut être démonté en actionnant le verrou.

Avec le raccord selon l'invention, les constructeurs automobiles ont à leur disposition un raccord rapide et facile d'utilisation, sécurisé lors du montage, tout en restant démontable si nécessaire.

### Présentation sommaire des dessins

La présente invention sera mieux comprise et d'autres avantages apparaîtront à la lecture de la description qui suit et des dessins annexés dans lesquels :
- la figure 1 est une vue en perspective du raccord tubulaire rapide pré-assemblé selon l'invention ;
- la figure 2 est une vue en perspective du raccord tubulaire rapide selon l'invention avec le second élément tubulaire connecté et retenu dans le premier élément tubulaire ;
- la figure 3 est une vue en perspective éclaté du raccord tubulaire rapide selon l'invention avec la bague de sécurité non assemblée dans le raccord ;
- la figure 4A est une vue en perspective de la bague du raccord tubulaire selon l'invention ;
- la figure 4B est une vue en perspective inverse de la figure 4A de la bague du raccord tubulaire selon l'invention ;
- les figures 5A à 5C sont des vues en coupe longitudinale du raccord tubulaire lors du montage de la bague de sécurité selon l'invention ;
- les figures 6A et 6B sont des vues en coupe longitudinale illustrant le montage d'un second élément tubulaire dans un raccord tubulaire selon l'invention.

### Description d'un mode de réalisation

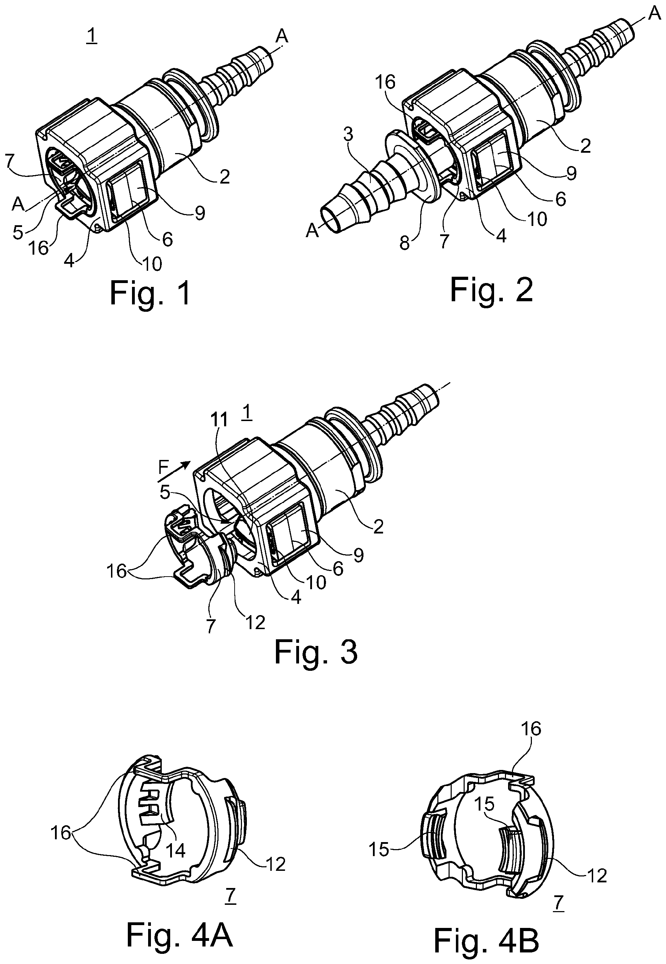

La figure 1 illustre un raccord tubulaire 1 rapide selon l'invention en position assemblée et destiné à connecter des éléments tubulaires de conduite fluidique comme illustré sur la figure 2 dans laquelle un premier élément tubulaire 2 est connecté à un second élément tubulaire 3 selon l'axe AA.

Le premier élément tubulaire 2 comporte un embout mâle axial solidaire d'un corps 4 creux pourvu d'un orifice 5 axial prévu dans l'alignement axial de l'embout mâle du premier élément tubulaire 2. Le corps 4 creux définit un logement destiné à recevoir de façon connue un verrou 6. Selon l'invention un système de sécurité, ici sous forme d'une bague 7 dont les deux faces sont visibles sur les figures 4A et 4B, est ajouté au corps 4 creux du raccord tubulaire 1 de sorte à assurer le blocage du second élément tubulaire 3 dans le premier élément tubulaire 2 malgré l'actionnement du verrou 6.

Le second élément tubulaire 3 présente un embout axial pourvu d'une nervure 8 circulaire. Le diamètre de l'embout du second élément tubulaire 3 est inférieur aux diamètres de l'orifice 5 axial et de l'embout mâle du premier élément tubulaire 2 dans lesquels il peut être reçu. Le second élément tubulaire 3 est engagé axialement au travers de l'orifice 5 dans le premier élément tubulaire 2.

Le logement du corps 4 creux du premier élément tubulaire 2 est pourvu d'ouvertures latérales 10 autorisant l'insertion latérale du verrou 6 (non montré) tandis que la bague 7 est insérée dans le premier élément tubulaire 2 par translation axiale par l'orifice 5 comme illustré par la flèche F sur la figure 3.

De façon connue, le verrou 6 se présente sous forme de losange traversé par l'orifice 5 axial avec des barrettes 9 d'appui logées dans les ouvertures latérales 10 du corps 4 du premier élément tubulaire 2, alors que les côtés de cette forme en losange sont flexibles et pourvus en leur milieu d'une section inclinée formant un cran de connexion 11, proéminent vers l'intérieur dans l'orifice 5 axial et vers l'extérieur pour bloquer le verrou 6 dans le corps 4 creux.

Les crans de connexion 11 sont agencés pour que, lors de l'engagement axial du second élément tubulaire 3 dans l'orifice 5 axial, l'appui axial de la nervure 8 circulaire sur les crans de connexion 11 provoque l'écartement radial des crans de connexion 11, autorisant ainsi le passage de la nervure 8 circulaire entre les crans de connexion 11 et l'introduction du second élément tubulaire 3 dans le premier élément tubulaire 2. Après franchissement de la nervure 8 circulaire, les crans de connexion 11 se rapprochent radialement entre eux, et se resserrent sur l'embout mâle du second élément tubulaire 3, derrière la nervure 8 circulaire. Les crans de connexion 11 coopèrent alors avec la nervure 8 circulaire pour bloquer axialement le second élément tubulaire 3 par rapport au premier élément tubulaire 2, par l'intermédiaire du verrou 6.

De façon connue, en appuyant sur les barrettes 9 le verrou 6 se déforme de sorte que les crans de connexion 11 s'écartent, libérant la nervure 8 circulaire du second élément tubulaire 3, ce dernier pouvant alors être retiré axialement du corps 4 du premier élément tubulaire 2.

Selon l'invention, la bague 7, visible sur les figures 4A et 4B, présente un périmètre divisible en deux portions, les deux portions pouvant être reproduites symétriquement. Une première portion de périmètre de la bague 7 est destinée à être agencée dans le corps 4 du premier élément tubulaire 2 et une seconde portion de périmètre est destinée à rester proéminente à l'extérieur du corps 4.

La portion de périmètre de bague 7 destinée à être insérée à l'intérieur du premier élément tubulaire 2 est flexible et comporte ici une nervure formant un cran de retenue 12 s'étendant radialement vers l'extérieur de la bague 7. Ici la bague 7 comporte deux crans de retenue 12 diamétralement opposés. Les crans de retenue 12 coopèrent avec une rainure 13 localisée sur la face intérieure du corps 4 creux, correspondant à un des bords des ouvertures latérales 10 présentes dans le corps 4, pour bloquer axialement la bague 7 dans le corps 4 creux.

La portion de périmètre de bague 7 destinée à être insérée à l'intérieur du premier élément tubulaire 2 comporte une section inclinée s'étendant radialement vers l'intérieur de la bague, formant une nervure 14. L'extrémité de la nervure 14 se présente sous la forme d'un cran harpon 15 orienté vers l'extérieur de la bague 7. Ici la bague 7 comporte deux nervures 14 diamétralement opposées.

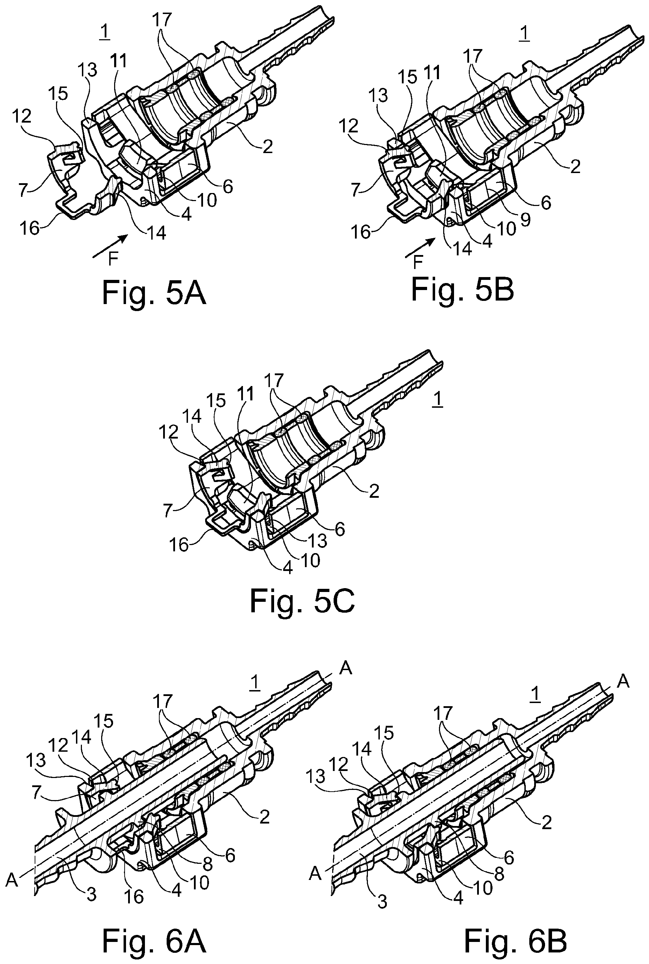

Les figures 5A à 5C illustrent l'insertion axiale de la bague 7 dans le corps 4 creux selon la flèche F.

Les nervures 14 de la bague 7 sont agencées pour que, lors de l'engagement axial de la bague 7 dans l'orifice 5 axial selon la flèche F des figures 5A et 5B, l'appui des nervures 14 inclinées sur les parois de l'orifice 5 provoque le resserrement radial de la bague 7, autorisant le passage de la bague 7 à travers l'orifice 5. Après franchissement des nervures 14, la bague 7 s'écarte radialement de sorte que les crans de retenue 12 se logent dans la rainure 13 du corps 4 comme cela est illustré sur la figure 5C.

Les nervures 14 de la bague 7 sont aussi agencées pour que, lors de l'engagement axial du second élément tubulaire 3 dans l'orifice 5 axial illustré sur les figures 6A et 6B, l'appui axial de la nervure 8 circulaire sur les nervures 14 de la bague 7 provoque l'écartement radial des nervures 14 de la bague 7, autorisant ainsi le passage de la nervure 8 circulaire entre les nervures 14 de la bague 7 et l'introduction du second élément tubulaire 3 dans le premier élément tubulaire 2. Après franchissement de la nervure 8 circulaire, les nervures 14 de la bague 7 se rapprochent radialement entre eux, et se resserrent sur l'embout du second élément tubulaire 3, derrière la nervure 8 circulaire. Les crans harpon 15 des nervures 14 de la bague 7 coopèrent alors avec la nervure 8 circulaire pour bloquer axialement le second élément tubulaire 3 par rapport au premier élément tubulaire 2, par l'intermédiaire du verrou 6.

Les nervures 14 de la bague 7 et les crans de connexion 11 du verrou peuvent être agencés pour s'écarter et se rapprocher simultanément par rapport à la nervure 8 circulaire du second élément tubulaire 3.

La portion de périmètre de bague 7 destinée à rester à l'extérieur du corps 4 du premier élément tubulaire 2 se présente sous la forme de créneau 16. Le créneau 16 est agencé de sorte qu'il se projette à l'extérieur du corps 4 du premier élément tubulaire 2 lorsque la bague 7 est en position de pré-assemblage dans le corps 4 du premier élément tubulaire 2 (figures 1 et 5C) et de sorte à rester accessible par un outil lorsque le second élément tubulaire 3 est connecté au raccord tubulaire 1. Une particularité de ce créneau 16 est qu'il est sécable et peut être cassé par l'outil.

Selon l'invention, la portion de périmètre de bague 7 destinée à rester à l'extérieur du corps 4 du premier élément tubulaire 2 peut aussi se présenter sous une autre forme, par exemple telle un demi-cercle, un oméga ou triangle.

Dans le mode de réalisation décrit ci-dessus et selon l'invention, lorsque les premier 2 et second 3 éléments tubulaires sont connectés, les crans de connexion 11 du verrou 6 et les nervures 14 de la bague s'opposent au retrait du second élément tubulaire 3. En appuyant sur les barrettes 9 d'appui du verrou 6, les crans de connexion 11 du verrou 6 libèrent le second élément tubulaire 3 mais celui-ci reste en place dans le premier élément tubulaire 2 car les nervures 14 de la bague 7 s'opposent toujours au retrait du second élément tubulaire 3 assurant ainsi la sécurité de la première connexion.

Néanmoins, selon l'invention il est possible d'extraire le second élément tubulaire 3 du premier élément tubulaire 2. Pour réaliser le retrait du second élément tubulaire 3 du premier élément tubulaire 2, il faut sectionner la bague 7 à l'aide de l'outil par action sur les créneaux 16 sécables accessibles à l'extérieur du corps 4 du raccord 1. Une fois la bague 7 cassée, les nervures 14 de la bague 7 n'ont plus de retenue axiale dans le corps 4 et par action sur les barrettes 9 du verrou 6 le second élément tubulaire 3 peut être déconnecté du premier élément tubulaire 2.

Selon l'invention, une nouvelle bague 7 peut être insérée dans le corps 4 du raccord pour que le raccord tubulaire 1 puisse être utilisé à nouveau avec un niveau de sécurité élevé.

Pour garantir une étanchéité fluidique entre les premier 2 et second 3 éléments tubulaires lorsqu'ils sont connectés, des joints 17 sont agencés dans le corps 4 creux du premier élément tubulaire 2.

Un autre avantage du raccord tubulaire 1 selon l'invention est d'améliorer la tenue mécanique du second élément tubulaire 3 dans le raccord tubulaire 1 sans pour autant dégrader l'effort de connexion. En effet, la nervure 8 circulaire du second élément tubulaire 3 est maintenue axialement en quatre points au lieu de deux dans les raccords classiques. De plus, les formes d'harpons présentes sur la bague 7 permettent un minimum d'effort pour les déformer lors de l'introduction du second élément tubulaire 3 dans le premier élément tubulaire 2.

Les différents éléments du raccord tubulaire 1 selon l'invention à savoir le premier élément tubulaire 2, le verrou 6 et la bague 7, peuvent être réalisés complètement par moulage de matière plastique. Un tel raccord tubulaire 1 peut être fabriqué à faible coût.

Ces éléments pourraient aussi être fabriqués par addition de matière dans une imprimante 3D si par exemple il s'agissait d'une fabrication en petites séries.

Les raccords tubulaires selon l'invention peuvent être utilisés pour raccorder deux conduites de transport de fluide dans le domaine de l'industrie automobile, et pourraient tout à fait être utilisés pour des applications sanitaires pour éviter le démontage involontaire ou sans outil des raccords.

## Revendications

1. Raccord tubulaire (1) rapide, comportant un premier élément tubulaire (2) avec un corps (4) creux de connecteur définissant un orifice (5) axial destiné à recevoir un second élément tubulaire (3) pourvu d'une nervure (8) circulaire, un verrou (6) bloqué axialement dans ledit premier élément tubulaire (2) et actionnable radialement pour libérer ledit second élément tubulaire (3) dudit premier élément tubulaire (2) et un système de sécurité (7) qui empêche le retrait dudit second élément tubulaire (3) **caractérisé en ce que** ledit système de sécurité (7) est une bague (7) flexible et sécable qui a une portion de périmètre à l'intérieur dudit premier élément tubulaire (2) entre l'entrée dudit orifice (5) dudit corps (4) et ledit verrou (6) pour assurer le blocage coaxial dudit second élément tubulaire (3) dans ledit premier élément tubulaire (2) malgré l'actionnement dudit verrou (6), ladite bague (7) ayant au moins une portion de périmètre sous forme de créneau (16) sécable qui se projette à l'extérieur dudit corps (4) .

2. Raccord (1) selon la revendication 1, **caractérisé en ce que** ladite bague (7) comprend sur ladite portion de périmètre à l'intérieur dudit premier élément tubulaire (2) au moins une nervure (14) inclinée radialement pour, lors de l'engagement axial dudit second élément tubulaire (3) dans ledit orifice (5) axial, s'écarter radialement sous l'effet de l'appui axial de ladite nervure (8) circulaire sur ladite nervure (14) inclinée et autoriser le passage de ladite nervure (8) circulaire puis se resserrer derrière ladite nervure (8) circulaire.

3. Raccord (1) selon la revendication 2, **caractérisé en ce que** ladite nervure (14) inclinée comprend en outre un cran harpon (15) qui vient en contact sur ladite nervure (8) circulaire dudit second élément tubulaire (3) et une rainure (13) interne dudit corps (4) creux pour bloquer axialement ledit second élément tubulaire (3) dans ledit premier élément tubulaire (2).

4. Raccord (1) selon l'une des revendications précédentes, **caractérisé en ce que** ladite bague (7) comprend deux nervures (14) inclinées diamétralement opposées.

5. Raccord (1) selon l'une des revendications précédentes, **caractérisé en ce que** ladite bague (7) comprend au moins un cran de retenue (12) qui coopère avec une rainure (13) interne dudit corps (4) creux pour bloquer axialement ladite bague (7) dans ledit corps (4) dudit premier élément tubulaire (2).

6. Raccord (1) selon l'une des revendications précédentes, **caractérisé en ce que** ladite bague (7) comprend deux créneaux (16) opposés.

## Patentansprüche

1. Rohrförmige Schnellkupplung (1), die ein erstes rohrförmiges Element (2) mit einem hohlen Körper (4) zur Verbindung aufweist, der eine axiale Öffnung (5) definiert, die zum Aufnehmen eines zweiten rohrförmigen Elements (3) bestimmt ist, das mit einer kreisförmigen Rippe (8) versehen ist, einen Verschluss (6), der axial in dem ersten rohrförmigen Element (2) gesichert und radial betätigbar ist, um das zweite rohrförmige Element (3) aus dem ersten rohrförmigen Element (2) freizugeben, und ein Sicherheitssystem (7), das das Herausziehen des zweiten rohrförmigen Elements (3) verhindert, **dadurch gekennzeichnet, dass** das Sicherheitssystem (7) ein flexibler und teilbarer Ring (7) ist, der einen Umfangsabschnitt im Inneren des ersten rohrförmigen Elements (2) zwischen dem Einlass der Öffnung (5) des Körpers (4) und dem Verschluss (6) aufweist, um die koaxiale Sicherung des zweiten rohrförmigen Elements (3) in dem ersten rohrförmigen Element (2) trotz Betätigung der Verschlusses (6) zu gewährleisten, wobei der Ring (7) mindestens einen Umfangsabschnitt in Form einer teilbaren Zacke (16) aufweist, die aus dem Körper (4) herausragt.

2. Kupplung (1) nach Anspruch 1, **dadurch gekennzeichnet, dass** der Ring (7) an dem Umfangsabschnitt im Inneren des ersten rohrförmigen Elements (2) mindestens eine Rippe (14) umfasst, die radial geneigt ist, damit sie sich beim axialen Eingriff des zweiten rohrförmigen Elements (3) in die axiale Öffnung (5) unter der Einwirkung des axialen Aufliegens der kreisförmigen Rippe (8) auf der geneigten Rippe (14) radial aufweitet und zulässt, dass sich die kreisförmige Rippe (8) hindurchbewegt, und sich anschließend wieder hinter der kreisförmigen Rippe (8) verengt.

3. Kupplung (1) nach Anspruch 2, **dadurch gekennzeichnet, dass** die geneigte Rippe (14) ferner eine Hakenraste (15) umfasst, die mit der kreisförmigen Rippe (8) des zweiten rohrförmigen Elements (3) und einer inneren Nut (13) des hohlen Körpers (4) in Berührung kommt, um das zweite rohrförmige Element (3) axial in dem ersten rohrförmigen Element (2) zu sichern.

4. Kupplung (1) nach einem der vorhergehenden Ansprüche, **dadurch gekennzeichnet, dass** der Ring (7) zwei diametral entgegengesetzt geneigte Rippen (14) umfasst.

5. Kupplung (1) nach einem der vorhergehenden Ansprüche, **dadurch gekennzeichnet, dass** der Ring (7) mindestens eine Halteraste (12) umfasst, die mit einer inneren Nut (13) des hohlen Körpers (4) zusammenwirkt, um den Ring (7) in dem Körper (4) des ersten rohrförmigen Elements (2) axial zu sichern.

6. Kupplung (1) nach einem der vorhergehenden Ansprüche, **dadurch gekennzeichnet, dass** der Ring (7) zwei gegenüberliegende Zacken (16) umfasst.

## Claims

1. A tubular quick coupling (1) comprising a first tubular element (2) with a hollow connector body (4) defining an axial orifice (5) that is to receive a second tubular element (3) provided with a circular rib (8), a latch (6) blocked axially in said first tubular element (2) and radially actuatable to release said second tubular element (3) from said first tubular element (2), and a security system (7) that prevents said second tubular element (3) being withdrawn, the coupling being **characterized in that** said security system (7) is a flexible and breakable ring (7) that has a perimeter portion inside said first tubular element (2) between the inlet of said orifice (5) of said body (4) and said latch (6) in order to block said second tubular element (3) coaxially in said first tubular element (2) in spite of actuating said latch (6), said ring (7) having at least one perimeter portion in the form of a breakable loop (16) that projects outside said body (4).

2. A coupling (1) according to claim 1, **characterized in that** said ring (7) includes on said perimeter portion inside said first tubular element (2) at least one rib (14) that slopes radially so that during axial engagement of said second tubular element (3) in said axial orifice (5), the rib moves radially outwards under the effect of the axial pressure of said circular rib (8) on said sloping rib (14) so as to allow said circular rib (8) to pass through and then be held tight behind said circular rib (8).

3. A coupling (1) according to claim 2, **characterized in that** said sloping rib (14) further includes a barb catch (15) that comes into contact with said circular rib (8) of said second tubular element (3) and an inside groove (13) of said hollow body (4) to block said second tubular element (3) axially in said first tubular element (2).

4. A coupling (1) according to any preceding claim, **characterized in that** said ring (7) has two sloping ribs (14) that are diametrically opposite.

5. A coupling (1) according to any preceding claim, **characterized in that** said ring (7) includes at least one retaining catch (12) that co-operates with an internal groove (13) of said hollow body (4) to block said ring (7) axially in said body (4) of said first tubular element (2).

6. A coupling (1) according to any preceding claim, **characterized in that** said ring (7) has two opposite loops (16).
